# EUROPEAN PATENT APPLICATION

(11) **EP 2 578 815 A2**
(43) Date of publication of application: **10.04.2013**
(21) Application number: 12186206.4
(22) Date of filing: 27.09.2012
(51) Int. Cl.: F01D 25/30

(54) **Exhaust gas diffuser**

(30) Priority: 03.10.2011 PL 39652011
(71) Applicant: General Electric Company, Schenectady, NY 12345 (US)
(72) Inventor: Nanda, Deepesh Dinesh, 560066 Bangalore (IN); Kobek, Piotr Edward, 02-256 Warsaw (PL)
(74) Representative: Cleary, Fidelma

(57) **Abstract**

According to one aspect of the invention, an exhaust gas diffuser (200) includes an outer casing (202) disposed about a center line (205) of the exhaust gas diffuser (200), a hub (204) disposed about the center line (205), and an end portion (214) of the hub (204) comprises a recess (216) configured to cause a flow of exhaust gas toward the center line (205) as the exhaust gas flows in a downstream direction (207).

## Description

### BACKGROUND OF THE INVENTION

The subject matter disclosed herein relates to turbines and, in particular, to diffusers for use with gas turbines and steam turbines.

Gas turbines may include a diffuser cone, or diffuser, coupled to the last stage bucket of the rotor. It is desirable for the diffuser to increase static pressure of the exhaust gas by decreasing the kinetic energy of the exhaust gas by reducing the exhaust gas velocity. In some cases, this may be achieved by increasing a cross-sectional area of the flow path in the diffuser in the direction of exhaust gas flow. The boundaries of the flow path may be affected by the geometry of the diffuser. In embodiments, the diffuser geometry may form disruptive flow, such as disruptive vortices, that may adversely affect the flow path, thus reducing the cross-sectional area of the flow path. For example, a hub or center portion of the diffuser forms an inner wall or boundary of the exhaust gas flow path, wherein an end portion of the hub leads to formation of a wake or disruptive vortex in the fluid flow. The wake may interfere with flow downstream of the inner wall and decrease the cross-sectional area of the flow path, thereby reduces kinetic energy conversion to static pressure rise and causes flow with high kinetic energy to downstream components.

### BRIEF DESCRIPTION OF THE INVENTION

According to one aspect of the invention, an exhaust gas diffuser includes an outer casing disposed about a center line of the exhaust gas diffuser, a hub disposed about the center line, and an end portion of the hub comprises a recess configured to cause a flow of exhaust gas toward the center line as the exhaust gas flows in a downstream direction.

These and other advantages and features will become more apparent from the following description taken in conjunction with the drawings.

### BRIEF DESCRIPTION OF THE DRAWING

Embodiments of the present invention will now be described, by way of example only, with reference to the accompanying drawings in which:
FIG. 1 is a schematic diagram of an exemplary turbine system;
FIG. 2 is a sectional side view of an exemplary diffuser for the turbine system; and
FIG. 3 is a sectional side view of another exemplary diffuser.

The detailed description explains embodiments of the invention, together with advantages and features, by way of example with reference to the drawings.

### DETAILED DESCRIPTION OF THE INVENTION

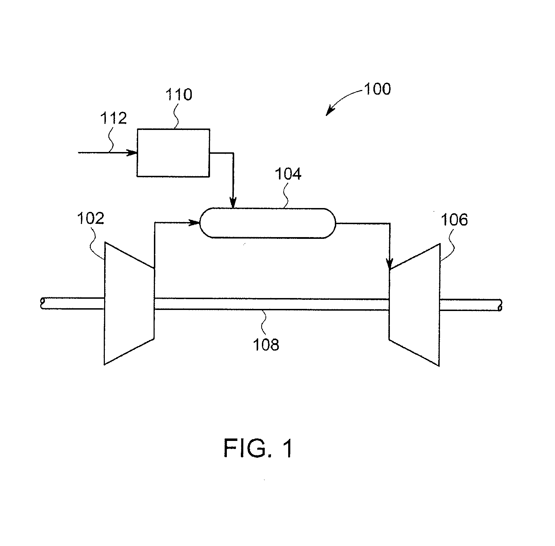

FIG. 1 is a schematic diagram of an embodiment of a gas turbine system 100. The system 100 includes a compressor 102, a combustor 104, a turbine 106, a shaft 108 and a fuel nozzle 110. In an embodiment, the system 100 may include a plurality of compressors 102, combustors 104, turbines 106, shafts 108 and fuel nozzles 110. As depicted, the compressor 102 and turbine 106 are coupled by the shaft 108. The shaft 108 may be a single shaft or a plurality of shaft segments coupled together to form shaft 108.

In an aspect, the combustor 104 uses liquid and/or gas fuel, such as natural gas or a hydrogen rich synthetic gas, to run the turbine engine. For example, fuel nozzles 110 are in fluid communication with a fuel supply 112 and pressurized air from the compressor 102. The fuel nozzles 110 create an air-fuel mix, and discharge the air-fuel mix into the combustor 104, thereby causing a combustion that creates a hot pressurized exhaust gas. The combustor 104 directs the hot pressurized exhaust gas through a transition piece into a turbine nozzle (or "stage one nozzle"), causing turbine 106 rotation as the gas exits the nozzle or vane and gets directed to the turbine bucket or blade. After the gas flow from the last stage of the turbine 106, exhaust gas flow is received by a diffuser (not shown) configured to increase static pressure of the flow across the diffuser.

In an embodiment, the exhaust gas flows into the diffuser, wherein a cross-sectional area of the exhaust gas flow substantially increases as the gas flows in a downstream direction. Accordingly, a velocity of the gas flow is reduced due to the increasing volume of the flow area, while a static pressure of the gas flow is increased. As discussed in detail below, a hub portion of the diffuser includes a recess configured to cause entrainment or drawing in of the exhaust gas flow path towards a center line of the diffuser to improve distribution of the exhaust gas flow proximate the diffuser outlet. Improved distribution of the exhaust gas flow proximate the diffuser outlet causes substantially uniform velocity and pressure profiles proximate the outlet, thereby improving diffuser performance and robustness.

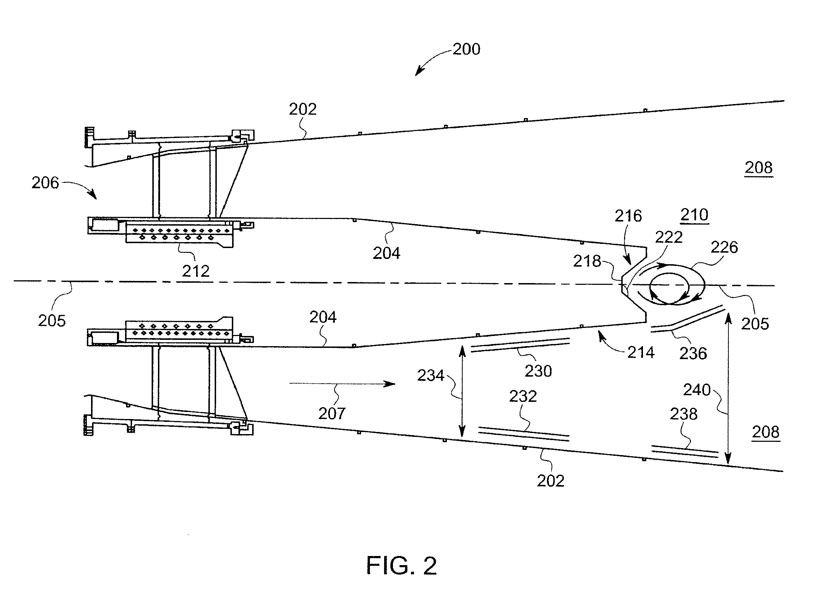

As used herein, "downstream" and "upstream" are terms that indicate a direction relative to the flow of working fluid through the gas turbine system 100. As such, the term "downstream" refers to a direction that generally corresponds to the direction of the flow of working fluid, and the term "upstream" generally refers to the direction that is opposite of the direction of flow of working fluid. The term "radial" refers to movement or position perpendicular to an axis or center line (205, FIG. 2). It may be useful to describe parts that are at differing radial positions with regard to an axis. In this case, if a first component resides closer to the axis than a second component, it may be stated herein that the first component is "radially inward" of the second component. If, on the other hand, the first component resides further from the axis than the second component, it may be stated herein that the first component is "radially outward" or "outboard" of the second component. The term "axial" refers to movement or position parallel to an axis. Finally, the term "circumferential" refers to movement or position around an axis. Although the following discussion primarily focuses on gas turbines, the concepts discussed are not limited to gas turbines.

Referring now to FIG. 2, a sectional view of an exemplary diffuser 200 for the turbine engine 100 is shown. As depicted, the diffuser 200 includes a portion of a turbine casing 202 and hub 204 disposed about the axis or center line 205 of the diffuser 200. The hub 204 is coupled to the casing 202 by a strut 250. The exemplary hub 204 includes a bearing 212 to enable relative movement of diffuser 200 components. The diffuser 200 includes an inlet 206 to be coupled to the turbine 106 to receive the exhaust gas flow from turbine stages. The exhaust gas flows in a downstream direction, as shown by flow arrow 207, to an outlet 208. As depicted, the exhaust gas flows past the hub 204 or center body to a diffuser dump region 210 that leads to the outlet 208. In an aspect, the outlet 208 is coupled to a heat recovery steam generator (not shown) to extract additional energy from the exhaust gas. The diffuser 200 is configured to reduce static pressure loss as the exhaust gas flows across the structure while also reducing velocity of the flow as it exits the diffuser 200 to improve operation of the heat recovery steam generator that receives the gas.

As depicted, a reduced velocity and reduced static pressure loss may be accomplished by the substantially flared (radially outward) or angled casing 202 (also referred to as an outer wall) and angled hub 204 (also referred to as an inner wall), which creates an expanding flow area or flow path in the downstream direction. The angled casing 202 has a reduced radius as it extends in a downstream direction. An effective flow path, as discussed herein, is the exhaust gas flow path along the cavity within the diffuser 200 wherein the flow is substantially uniform in velocity and pressure across a cross-section of the path. For example, an effective flow path may be bounded by walls defining the cavity, wherein the flow path includes a laminar flow that occurs proximate the walls. The cross sectional area of the effective flow path may be reduced in portions of the cavity where disruptive flow, such as disruptive vortices, are formed. The exemplary effective flow path shown is defined or bounded by an inner flow 230 along hub 204 and outer flow 232 along casing 202, wherein a distance 234 defines the radial distance of the effective flow path.

As shown, a cross-sectional area of effective flow path increases in a downstream direction, wherein the radial distance 234 increases to radial distance 240 proximate the outlet 208. In an aspect, an end portion 214 of the hub 204 is configured to cause a flow of exhaust gas toward the center line 205, thereby reducing the formation and/or size of vortex 226 which reduces the effective flow path or area available for flow diffusion as the exhaust gas flows in a downstream direction 207. In the downstream portion of diffuser, the effective flow path for the exhaust gas is defined by an inner flow 236 and outer flow 232. In an embodiment, the inner flow 236 is defined by and flows along an outer portion of the vortex 226 while the outer flow 232 is defined by and flows along the casing 202. In an embodiment, a recess 216 in the end portion 214 of the hub 204 causes the inner flow 236 of the exhaust gas to flow towards the center line 205. The recess 216 causes formation of a vortex 226 of substantially swirling or circular flow, which may be described as elongated along the center line 205. The recess 216 reduces formation of a wake near the diffuser dump region 210 to reduce flow disruption. In other embodiments that have a flat surface instead of the recess 216 formed in the hub 204, a wake is formed proximate the dump region, which disrupts inner flow 236 and reduces effective flow area for the gas. The resulting reduced effective flow area causes increased fluid flow velocity, which is not desirable for operation of the heat recovery steam generator. In an embodiment, the vortex 226 is elongated, thus having an axial dimension greater than a radial dimension. The exemplary vortex 226 reduces wake or disruptive vortex formation and interference with the exhaust gas effective flow path to improve diffuser 200 performance by providing a substantially uniform fluid flow proximate the outlet.

In embodiments, the diffuser dump region 210 has increasing volume downstream of the hub 204. The diffuser dump region 210 may have a substantially high diffusion gradient, which, in operation, leads to the formation of a disruptive vortex or vortices (not shown) that interfere with and reduce an effective flow path for the exhaust gas. The resulting reduced effective flow path reduces the efficiency of the diffuser 200. As depicted, an end portion 214 of the hub 204 and recess 216 are configured to form the vortex 226 to reduce formation of disruptive vortices, thereby increasing a cross-sectional area of the effective flow path proximate the diffuser dump 210 region. It should be understood that development of disruptive vortices may interfere with the substantially uniform flow of exhaust gas and thereby will reduce the size of the effective flow path. The exemplary recess 216 includes a wall or surface 218 that is substantially perpendicular to the center line 205 and a wall or surface 220 that is angled with respect to the surface 218. In an aspect, the surface 218 may be substantially parallel to the centerline 205. In embodiments, the recess 216 may be any suitable cavity formed in the end portion 214 to cause formation of a vortex to reduce interference with the effective flow path of the exhaust gas. Exemplary recesses may include curved and/or angled surfaces forming a cavity in the upstream direction within the end portion 214.

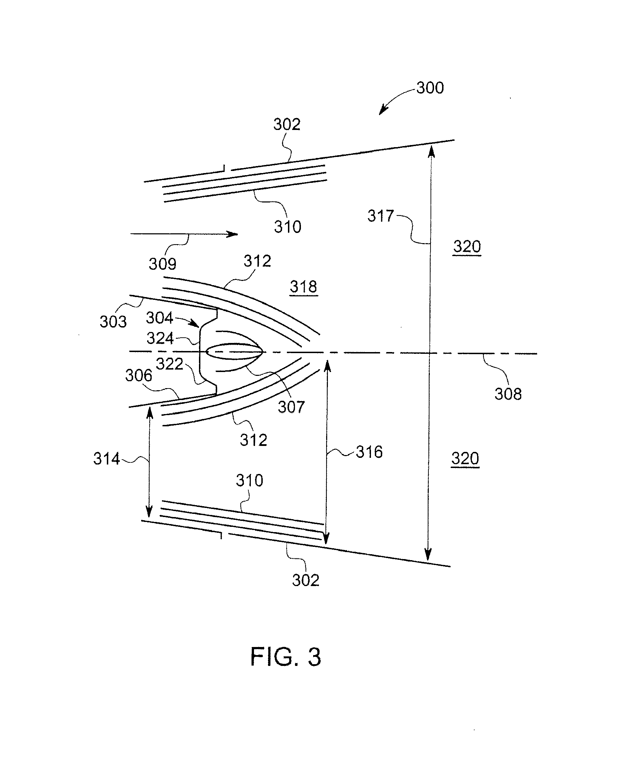

FIG. 3 is a detailed sectional view of a portion of an exemplary diffuser 300. The diffuser 300 includes a casing 302 and a hub 303 disposed about a center line 308. A recess 304 is formed in an end portion 306 of the hub 303. In the embodiment, the recess 304 includes a curved surface 322 and a surface 324 substantially perpendicular to the center line 308. The recess 304 may be any suitable geometry to cause formation of a vortex 307 to encourage or draw in an exhaust gas flow 309 toward the center line 308. As depicted, an effective flow path of the exhaust gas is defined by an outer flow 310 and an inner flow 312, wherein a radial distance 314 and 316 of the effective flow path increases in the downstream direction. In an embodiment, a radial distance 317 of the effective flow path is defined by the casing 302 proximate an outlet 320 of the diffuser 300. The formation of vortex 307 reduces interference between disruptive vortices of flow with the exhaust gas effective flow path to improve diffuser 300 performance by providing a substantially uniform fluid flow and corresponding reduced flow velocity proximate the outlet.

In an aspect, the vortex 307 may be described as substantially elongated along the center line 308 and creating a tortuous path for a radial flow component of the vortex 307 into the effective flow path, thus enabling an increased cross-sectional area of the effective flow path in a downstream direction. In an aspect, the vortex 307 may further be described as a "vortex trap" encouraging substantially axial (along center line 308) flow and discouraging radial flow of the exhaust gas. Accordingly, the arrangement for the diffuser 300 and the recess 304 in the end portion 306 improves diffuser performance by reducing flow velocity and increasing static pressure across the effective flow path as the exhaust gas flows through the outlet 320. In an aspect, due to the formation of the vortex 307, the flow velocity and pressure are substantially uniform across the cross-section of the effective flow path proximate the outlet 320. Improved distribution of the exhaust gas flow proximate the diffuser outlet causes substantially uniform velocity and pressure profiles proximate the outlet, thereby improving diffuser performance and robustness.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A gas turbine comprising:
   a turbine casing that surrounds a portion of the gas turbine; and
   an exhaust gas diffuser coupled to the turbine casing, the diffuser comprising:
      an inlet to receive exhaust gas flow from the gas turbine; and
      an outlet downstream of the inlet, wherein an effective flow path for exhaust gas between the inlet and outlet is defined by the turbine casing and a center body positioned within the turbine casing and is defined by the turbine casing and an outer portion of a vortex downstream of the center body, and wherein a cross-sectional area for the effective flow path increases in the downstream direction.
2. The gas turbine of clause 1, wherein the center body comprises an end portion with a recess configured to form the vortex.
3. The gas turbine of clause 2, wherein the recess comprises a first surface substantially perpendicular to a center line for the exhaust gas diffuser and a second surface at an angle to the first surface.
4. The gas turbine of clause 2, wherein the vortex is elongated along a center line for the exhaust gas diffuser.

## Claims

1. An exhaust gas diffuser (200) comprising:
an outer casing (202,302) disposed about a center line (205,308) of the exhaust gas diffuser (200,300);
an inner hub (204) disposed about the center line (205,308); and
an end portion (214) of the hub (204) comprises a recess (216) configured to cause a flow of exhaust gas toward the center line (205,308) as the exhaust gas flows in a downstream direction.

2. The exhaust gas diffuser of claim 1, wherein an effective flow path for exhaust gas is defined by the outer casing (202,302) and the inner hub (204) for at least first portion of the exhaust gas diffuser (200,300) and is defined by the outer casing (202,302) and an outer portion of an elongated vortex (226,307) downstream of the inner hub (204).

3. The exhaust gas diffuser of claim 2, wherein a cross-sectional area of the effective flow path increases in the downstream direction (207).

4. The exhaust gas diffuser of any of claims 1 to 3, wherein the end portion (214) of the hub (204) reduces a formation of a vortex (226) that reduces effective flow path.

5. The exhaust gas diffuser of any of claims 1 to 4, wherein the recess (216,306) comprises a first surface (218) substantially perpendicular to the center line (205,308) and a second surface (220) at an angle (222) to the first surface (218).

6. The exhaust gas diffuser of any of claims 1 to 5, wherein the recess (216,306) causes formation of a vortex elongated along the center line (205,308).

7. The exhaust gas diffuser of any of claims 1 to 6, wherein the end portion (214) causes a substantially uniform cross-sectional flow velocity of the exhaust gas flow proximate an outlet (208,320) of the exhaust gas diffuser (200,300).

8. The exhaust gas diffuser of any of claims 1 to 7, wherein the end portion causes a substantially uniform cross-sectional pressure of the exhaust gas flow proximate an outlet (208,320) of the exhaust gas diffuser (200,300).

9. The exhaust gas diffuser of any preceding claim, wherein the inner hub (204) is disposed inside the casing (202,302) and wherein an exhaust gas flow is received via an inlet (206) formed between the casing (202,302) and hub (204).

10. The exhaust gas diffuser of any preceding claim, wherein the recess (216,306) forms a tortuous path to reduce flow in a radial direction in the vortex (226).
